(19) Europäisches Patentamt / European Patent Office / Office européen des brevets

(11) **EP 4 452 716 B1**

(12) **EUROPEAN PATENT SPECIFICATION**

(45) Date of publication and mention
of the grant of the patent:
**29.10.2025   Bulletin 2025/44**

(21) Application number: **22700762.2**

(22) Date of filing: **12.01.2022**

(51) International Patent Classification (IPC):
**B60W 10/08** *(2006.01)*      **B60W 30/18** *(2012.01)*
**B60L 15/20** *(2006.01)*      **B60W 50/14** *(2020.01)*

(52) Cooperative Patent Classification (CPC):
**B60W 30/18118; B60L 3/0061; B60L 15/2018;
B60L 15/2081; B60W 10/08;** B60L 2240/423;
B60L 2240/425; B60L 2240/642; B60L 2240/80;
B60W 2050/146; B60W 2510/083; B60W 2510/087

(86) International application number:
**PCT/EP2022/050474**

(87) International publication number:
**WO 2023/134843 (20.07.2023 Gazette 2023/29)**

(54) **VEHICLE CONTROL UNIT AND METHOD FOR INDICATING A REMAINING TIME FOR WHICH A HILL HOLD FEATURE CAN BE PROVIDED**

FAHRZEUGSTEUERUNGSEINHEIT UND VERFAHREN ZUR ANZEIGE EINER RESTZEIT, FÜR DIE EIN BERGHALTEMERKMAL BEREITGESTELLT WERDEN KANN

UNITÉ DE COMMANDE DE VÉHICULE ET PROCÉDÉ D'INDICATION D'UN TEMPS RESTANT POUR LEQUEL UNE CARACTÉRISTIQUE DE STABILITÉ EN CÔTE PEUT ÊTRE FOURNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2024   Bulletin 2024/44**

(73) Proprietor: **Huawei Digital Power Technologies
Co., Ltd.
Shenzhen, Guangdong 518043 (CN)**

(72) Inventor: **AMEUR, Amir
80992 Munich (DE)**

(74) Representative: **Maiwald GmbH
Engineering
Elisenhof
Elisenstrasse 3
80335 München (DE)**

(56) References cited:
CN-B- 106 515 507      DE-A1- 102012 223 867
US-A1- 2018 290 655      US-B1- 8 862 302

**Description**

TECHNICAL FIELD

The invention relates to a vehicle control unit (VCU) for indicating a remaining time for which a hill hold feature of an electric vehicle can be provided, a vehicle control system comprising such VCU and a corresponding method. In particular, the invention relates to the field of electric vehicles. Specifically, this invention relates to a warning concept for hill hold applications using electric motor.

BACKGROUND

Hill Hold is a function that enables maintaining the car position on a slope (uphill or downhill) by applying enough braking force to compensate the gravitational effect. For electric vehicle, an alternative way of holding the vehicle on slope is by using the electric motor. The propulsion system, i.e., system of motors, gearbox and power electronics, needs to provide the right amount of torque to keep the vehicle at standstill, which is known as hold torque or stall torque. Hold torque can have different values and can be applied in drive or reverse directions. If the car is facing uphill, a positive hold torque in drive direction is applied, and if the car is facing downhill, a negative hold torque in reverse direction is applied.

Applying constant torque at zero speed can cause overheating for the electric machine and the power electronics, since all the power fed to the propulsion system is transformed into heat, electrical to mechanical efficiency is zero in this case. If the overheating continues, the components can enter a derating state where the amount of the output torque is significantly reduced. A reduced torque in hill hold situations means, the vehicle can start rolling against the driver's intention.

US 2018/290655 A1 describes a control apparatus of an electric vehicle.

SUMMARY

This invention provides an efficient and cost-effective solution for a safe implementation of the hill hold feature in an electric vehicle.

The foregoing and other objects are achieved by the features of the independent claims. Further implementation forms are apparent from the dependent claims, the description and the figures.

The solution is based on the idea of coupling the electrical, mechanical and thermal properties of the vehicle during hill hold situation. By calculating the required hold torque, estimating the equivalent power loss to achieve the hold torque, the heat generated, and the temperature rise of the electric drive unit, and with prior knowledge of the temperature, from which a derating behavior of the drive unit starts, the temperature and corresponding time at which the current hold torque cannot be provided anymore can be determined. The thermal derating is reflected by the reduction of maximum output torque of the drive unit.

The solution can be implemented in a vehicle control unit (VCU) that coordinates the powertrain features as upper domain controller. The idea is to implement the derating model with different input parameters in the VCU. The VCU manages the torque of the electric drive during the hill hold situation and receives information from the other controllers of the vehicle.

In order to describe the invention in detail, the following terms, abbreviations and notations will be used:

EV      electric vehicle
VCU    vehicle control unit
DC      direct current
AC      alternating current

In this invention, electric vehicles, vehicle control units and hill hold features are described. An electric vehicle (EV) is a vehicle that uses one or more electric motors for propulsion. It can be powered autonomously by a battery. EVs include, but are not limited to, road and rail vehicles, surface and underwater vessels, electric aircraft and electric spacecraft.

A Vehicle Control Unit, or VCU, is the supervisory controller for electric or hybrid vehicles. Vehicle Control Units act as domain controller for electric or hybrid vehicles. The VCU reads sensor signals, for example, brakes, high-voltage interlock loop (HVIL) or charger connection. Then, it acts to balance the system energy, optimize torque, control the motor, HV battery pack and the on-board charging system up to charger lock.

The hill hold feature for non-electric vehicles can be described by a function that enables maintaining the car position on a slope, which can be uphill or downhill, by applying enough braking force to compensate the gravitational effect.

Hill Hold for non-electric drives is mainly realized by the mechanical brakes system receiving commands from the domain controller to keep the brake pressure for X amount of time to allow the user to actuate the accelerator pedal to climb uphill or start rolling downhill. In general, Hill Hold functions can be classified based on the entry conditions and exit conditions as i) Hill-Start-Assist and ii) Automatic-Vehicle-Hold (AVH). Hill-Start-Assist is usually implemented for relatively high slopes, where the car is maintained for 3 seconds at same position using the mechanical brakes. After the 3 seconds elapse, the mechanical brakes are released, and the user is expected to actuate the accelerator pedal to move the car uphill. Automatic-Vehicle-Hold is a feature that is used to bring the car to a hold for extended amount of time. Automatic-Vehicle-Hold and Creep are two opposite features. When AVH is activated, Creep is disabled and vice versa. The intention is to keep the car at the same position after each motion stop (triggered usually after depressing the brake pedal and bring the vehicle to zero speed). When the brake pedal is released, the vehicle engages the mechanical brakes and waits for the user to take action up until 10 minutes, for example. After the 10 minutes elapse and the user didn't take action, the vehicle engages the park brake automatically.

The hill hold feature as described in this invention, is a feature of an electric vehicle, which can be implemented by the vehicle control unit. This hill hold feature enables keeping a position of the vehicle at standstill on a slope with the aid of the electric drive of the vehicle. With the development of electric drive technologies, the hill hold feature is more commonly integrated in the powertrain functions, and by means of torque control and slope estimation.

According to a first aspect, the invention relates to a vehicle control unit for indicating a remaining time for which a hill hold feature of an electric vehicle can be provided, wherein the hill hold feature enables keeping a position of the vehicle at standstill on a slope with the aid of an electric drive of the vehicle, wherein the vehicle control unit is configured to: receive information for determining a hold torque of the electric drive for holding the vehicle at standstill on the slope, information about a cooling of the electric drive and information about an initial temperature of the electric drive when the hill hold feature is enabled; determine a time until a derating of the electric drive begins based on a predefined derating model of the electric drive and the information for determining the hold torque, the information about the cooling and the information about the initial temperature, wherein the derating model describes a heat dissipation in the electric drive and an associated derating of the electric drive when the hold torque is provided by the electric drive at standstill, the heat dissipation depending on the hold torque, the cooling and the initial temperature of the electric drive; and determine a time indicator, the time indicator indicating the remaining time for which the hill hold feature can be provided based on the time until the derating of the electric drive begins.

Such a vehicle control unit provides an efficient and cost-effective solution for a safe implementation of the hill hold feature in an electric vehicle. The solution is based on the idea of coupling the electrical, mechanical and thermal properties of the vehicle during hill hold situation. By calculating the required hold torque, estimating the equivalent power loss to achieve the hold torque, the heat generated, and the temperature rise of the electric drive, and with prior knowledge of the initial temperature, from which a derating behavior of the electric drive starts, the temperature and corresponding time at which the current hold torque cannot be provided anymore can be advantageously determined by the VCU.

In an exemplary implementation of the vehicle control unit, the vehicle control unit is configured to: receive information about a rotor angular position of the electric drive; and determine the time until the derating of the electric drive begins further based on the angular position of the electric drive.

The rotor angular position is received for a specific implementation of the electric drive, i.e., for an electric drive that is implemented by a permanent magnet system.

This provides the advantage that by additionally considering the information about the rotor angular position, a more precise result of the time until the derating of the electric drive begins can be determined.

In an exemplary implementation of the vehicle control unit, the derating model comprises a memory storing a set of predefined hold torque values, a set of predefined cooling parameter values, a set of predefined initial temperatures and/or a set of rotor angular positions of the electric drive, wherein the memory further comprises a time until the derating of the electric drive begins for combinations of the hold torque values, the cooling parameter values, the initial temperatures and/or the rotor angular positions of the electric drive.

This provides the advantage that the derating model can be efficiently provided by a memory in which a set of known parameters and the respective derating time is stored. Such a memory can be predetermined based on prior measurements. By using such a memory no complex computation is required.

In an exemplary implementation of the vehicle control unit, the derating model comprises one or more of a lookup table, a neural network, or a function fit based on polynomial functions.

This provides the advantage that a lookup table can be easily processed, a neural network can efficiently and precisely store a large database of information and a function fit based on polynomial functions can be easily processed.

In an exemplary implementation of the vehicle control unit, the vehicle control unit is configured to: receive sensor data comprising information for determining a road gradient; and determine the hold torque based on the sensor data.

This provides the advantage that the road gradient can be flexibly determined. In particular, there is no need for an explicit slope sensor, any other sensor providing sensor data by which the slope can be determined can be used as well.

The information for determining the road gradient may be received from a slope sensor or from an acceleration sensor or from any other kind of sensor that is able providing information for determining the road gradient. The road gradient may be determined directly from the slope sensor data or indirectly from the acceleration or other sensor data.

In an exemplary implementation of the vehicle control unit, the vehicle control unit is configured to: determine the hold torque based on a mass of the vehicle, a rolling resistance of the vehicle and the road gradient; or determine the hold torque based on a total resistance of the vehicle and a wheel radius of the vehicle.

This provides the advantage that a known vehicle model can be used for accurately determining the hold torque.

In an exemplary implementation of the vehicle control unit, the vehicle control unit is configured to: output the time indicator as a visual signal to a display or a dashboard of the vehicle or as an acoustic signal or as a haptic signal.

This provides the advantage that a variety of different output mechanisms can be applied for flexibly outputting the time indicator depending on the specific requirements or demands of the user.

In an exemplary implementation of the vehicle control unit, the vehicle control unit is configured to initialize a warning countdown based on the time indicator.

This provides the advantage that the user can be urged to pay particular attention to this hill hold feature and the corresponding time indicator.

In an exemplary implementation of the vehicle control unit, the time indicator is offset by a safety factor accounting for a user reaction delay.

This provides the advantage that the reaction delay of the user is considered when using this safety factor offset. The vehicle cannot roll down from the hill before the user can react.

In an exemplary implementation of the vehicle control unit, the vehicle control unit is configured to disable the hill hold feature when the warning countdown has ended.

This provides the advantage that by disabling the hill hold feature, the electric drive is protected against overheating.

In an exemplary implementation of the vehicle control unit, the vehicle control unit is configured to output an indication to a user that the hill hold feature is deactivated when the time indicator is smaller or equal than zero.

This provides the advantage that the user knows when the hill hold feature cannot be provided anymore. Thus, the user knows when taking the necessary steps to secure the vehicle against rolling down from the hill.

In an exemplary implementation of the vehicle control unit, the vehicle control unit is configured to output an indication to a user that the hill hold feature is deactivated if information indicating an actuation of an acceleration pedal or information about an activation of a park brake is received.

This provides the advantage that the user is informed about a deactivated hill hold feature. Thus, the user can accelerate or park the vehicle without being influenced by the hill hold feature.

In an exemplary implementation of the vehicle control unit, the information about the cooling comprises at least one of the following: a flow rate of a coolant of a vehicle cooling system, an amount of the coolant filled in the vehicle cooling system, a viscosity of the coolant, a type of the coolant, a temperature of the coolant.

The cooling system may be air-cooled or liquid-cooled, for example fan or radiator, etc.

This provides the advantage that a variety of cooling systems can be applied for cooling the electric drive. Depending on the specific cooling, the time indicator may vary.

According to a second aspect, the invention relates to a vehicle control system for indicating a remaining time for which a hill hold feature of an electric vehicle can be provided, wherein the hill hold feature enables keeping a position of the vehicle at standstill on a slope with the aid of an electric drive of the vehicle, wherein the vehicle control system comprises: a vehicle control unit according to any of the preceding claims; and a sensor for providing sensor data comprising information for determining a road gradient of the vehicle, wherein the vehicle control unit is configured to determine the hold torque based on the sensor data.

Such a vehicle control system provides an efficient and cost-effective solution for a safe implementation of the hill hold feature in an electric vehicle. The vehicle control system is based on the idea of coupling the electrical, mechanical and thermal properties of the vehicle during hill hold situation. By calculating the required hold torque, estimating the equivalent power loss to achieve the hold torque, the heat generated, and the temperature rise of the electric drive, and with prior knowledge of the initial temperature, from which a derating behavior of the electric drive starts, the temperature and corresponding time at which the current hold torque cannot be provided anymore can be advantageously determined by the vehicle control system.

The sensor can be a slope sensor or an acceleration sensor or any other kind of sensor that is able providing sensor data comprising information for determining the road gradient. The VCU can determine the road gradient directly from the sensor data of the slope sensor or indirectly from the sensor data of the acceleration or other sensor.

According to a third aspect, the invention relates to a method for indicating a remaining time for which a hill hold feature of an electric vehicle can be provided, wherein the hill hold feature enables keeping a position of the vehicle at standstill on a slope with the aid of an electric drive of the vehicle, wherein the method comprises: receiving information for determining a hold torque of the electric drive for holding the vehicle at standstill on the slope, information about a cooling of the electric drive and information about an initial temperature of the electric drive when the hill hold feature is enabled;

determining a time until a derating of the electric drive begins based on a predefined derating model of the electric drive and the information about the hold torque, the information about the cooling and the information about the initial temperature, wherein the derating model describes a heat dissipation in the electric drive and an associated derating of the electric drive when the hold torque is provided by the electric drive at standstill, the heat dissipation depending on the hold torque, the cooling and the initial temperature of the electric drive; and determining a time indicator, the time indicator indicating the remaining time for which the hill hold feature can be provided based on the time until the derating of the electric drive begins.

Such a method provides the same advantages as the VCU described above, i.e., providing an efficient and cost-effective solution for a safe implementation of the hill hold feature in an electric vehicle. The method is based on the idea of coupling the electrical, mechanical and thermal properties of the vehicle during hill hold situation as described above for the VCU or the vehicle control system.

According to a fourth aspect, the invention relates to a computer program product including computer executable code or computer executable instructions that, when executed, causes at least one computer to execute the method according to the third aspect described above.

The computer program product may run on a vehicle control unit as described above with respect to the first aspect or on any controller or processor performing vehicle control.

According to a fifth aspect, the invention relates to a computer-readable medium, storing instructions that, when executed by a computer, cause the computer to execute the method according to the third aspect described above. Such a computer readable medium may be a non-transient readable storage medium. The instructions stored on the computer-readable medium may be executed by a controller or a processor, e.g., by the vehicle control unit according to the first aspect.

## BRIEF DESCRIPTION OF THE DRAWINGS

Further embodiments of the invention will be described with respect to the following figures, in which:

Figure 1 shows a schematic diagram of a vehicle 100 driving up a slope;
Figure 2 shows a block diagram illustrating an experimental setup 200 for determining the heat losses and temperature rise in the drive unit of an electrical vehicle;
Figure 3 shows a schematic diagram illustrating an exemplary derating model 300 according to the invention;
Figure 4 shows a schematic diagram illustrating an exemplary flowchart 400 for implementing a hill hold feature in an electric vehicle according to the invention;
Figure 5 shows a schematic diagram illustrating an exemplary vehicle control system 500 for implementing the hill hold feature according to the invention;
Figure 6 shows a schematic diagram 600 illustrating an exemplary implementation of a hill hold warning function 620 according to the invention;
Figure 7 shows a state diagram 700 representing an exemplary implementation of the hill hold feature according to the invention;
Figure 8 shows a schematic diagram illustrating a hill hold countdown 800 according to the invention; and
Figure 9 shows a schematic diagram illustrating a method 900 for implementing the hill hold feature according to the invention.

## DETAILED DESCRIPTION OF EMBODIMENTS

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the invention. The following detailed description, therefore, is not to be taken in a limiting sense, and the scope of the invention is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

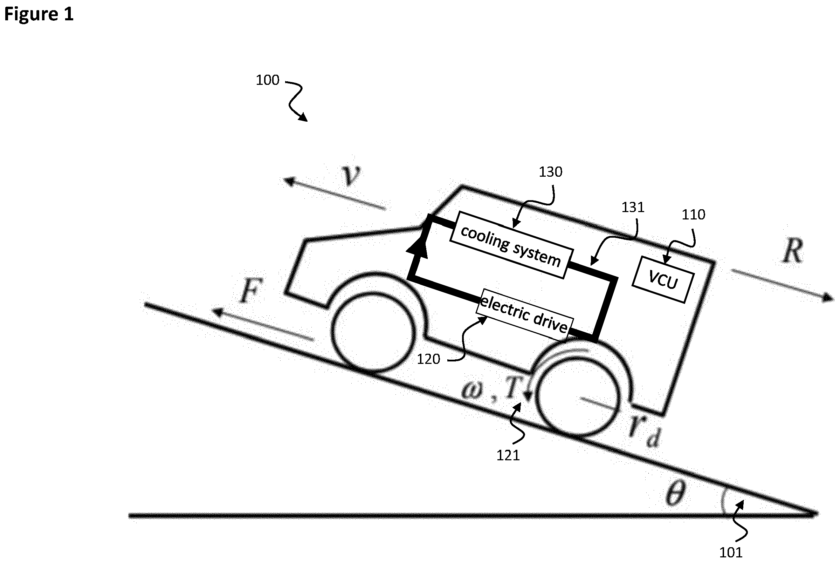

Figure 1 shows a schematic diagram of a vehicle 100 driving up a slope 101. The vehicle 100 is driven by an electric drive 120 and controlled by a vehicle control unit 110 as described in the following.

The vehicle control unit 110 is used for indicating a remaining time for which a hill hold feature of the electric vehicle 100 can be provided. The hill hold feature enables keeping a position of the vehicle 100 at standstill on the slope 101 with the aid of the electric drive 120 of the vehicle 100.

The vehicle control unit 110 is configured to receive information for determining a hold torque 121 of the electric drive 120 for holding the vehicle 100 at standstill on the slope 101, information about a cooling 131 of the electric drive 120 by a cooling system 130 and information about an initial temperature of the electric drive 120 when the hill hold feature is enabled.

The vehicle control unit 110 is configured to determine a time until a derating of the electric drive 120 begins based on a predefined derating model of the electric drive 120 and the information for determining the hold torque 121, the information about the cooling 131 and the information about the initial temperature.

The derating model describes a heat dissipation in the electric drive 120 and an associated derating of the electric drive 120 when the hold torque is provided by the electric drive 120 at standstill. The heat dissipation depends on the hold torque 121, the cooling 131 and the initial temperature of the electric drive 120.

The vehicle control unit 110 is configured to determine a time indicator which indicates the remaining time for which the hill hold feature can be provided based on the time until the derating of the electric drive 120 begins.

The vehicle control unit 110 may further be configured to receive information about a rotor angular position of the electric drive; and determine the time until the derating of the electric drive begins further based on the angular position of the electric drive.

Note that the rotor angular position can be received for a specific implementation of the electric drive, e.g., for an electric drive that is implemented by a permanent magnet system.

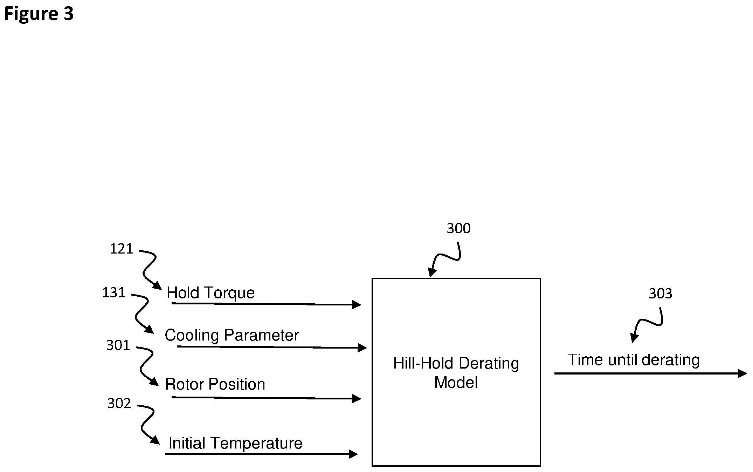

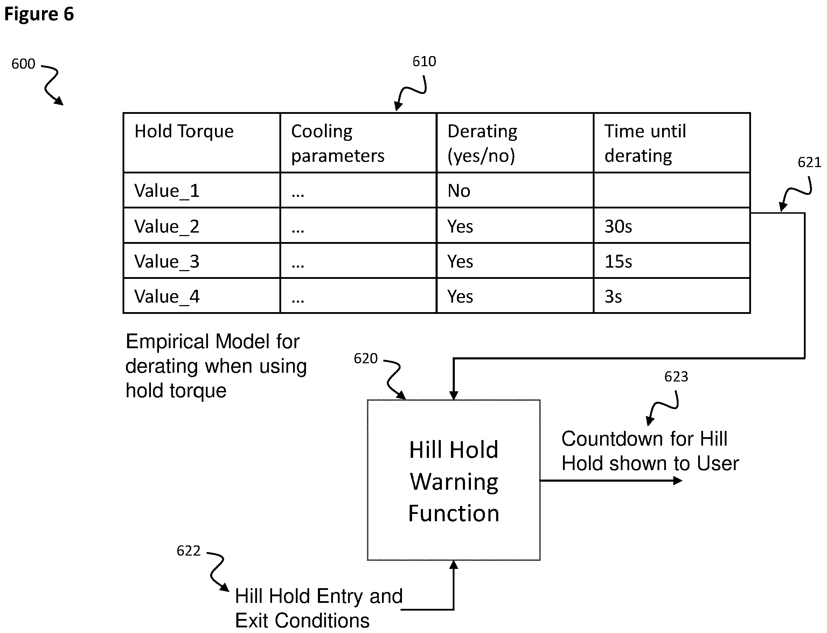

The derating model may comprise or may be based on a memory storing a set of predefined hold torque values, a set of predefined cooling parameter values, a set of predefined initial temperatures and/or a set of rotor angular positions of the electric drive. The memory may further comprise a time until the derating of the electric drive begins for combinations of the hold torque values, the cooling parameter values, the initial temperatures and/or the rotor angular positions of the electric drive, e.g., as shown in Figure 3 or in Figure 6.

The derating model may comprise one or more of a lookup table, a neural network, or a function fit based on polynomial functions or a combination thereof.

The vehicle control unit 110 may be configured to: receive sensor data comprising information for determining a road gradient; and determine the hold torque based on the sensor data.

The information for determining the road gradient may be received from a slope sensor or from an acceleration sensor or from any other kind of sensor that is able providing information for determining the road gradient. The road gradient may be determined directly from the slope sensor data or indirectly from the acceleration or other sensor data.

The vehicle control unit 110 may be configured to determine the hold torque based on a mass of the vehicle, a rolling resistance of the vehicle and the road gradient. Alternative or additionally, the vehicle control unit 110 may be configured to determine the hold torque based on a total resistance of the vehicle and a wheel radius of the vehicle 100, e.g. based on a relationship as described below.

The vehicle control unit 110 may be configured to output the time indicator as a visual signal to a display or a dashboard of the vehicle or as an acoustic signal or as a haptic signal.

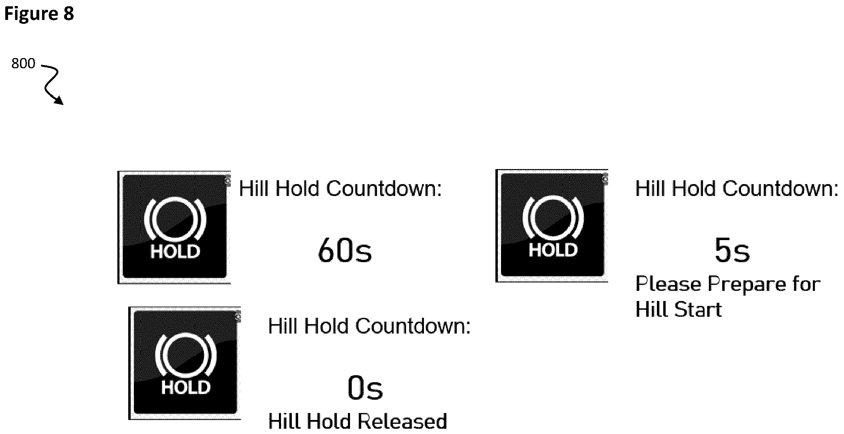

The vehicle control unit 110 may be configured to initialize a warning countdown based on the time indicator, e.g., as shown and described with respect to Figure 8.

The time indicator can be offset by a safety factor accounting for a user reaction delay, e.g., as described below in detail.

The vehicle control unit 110 may be configured to disable the hill hold feature when the warning countdown has ended.

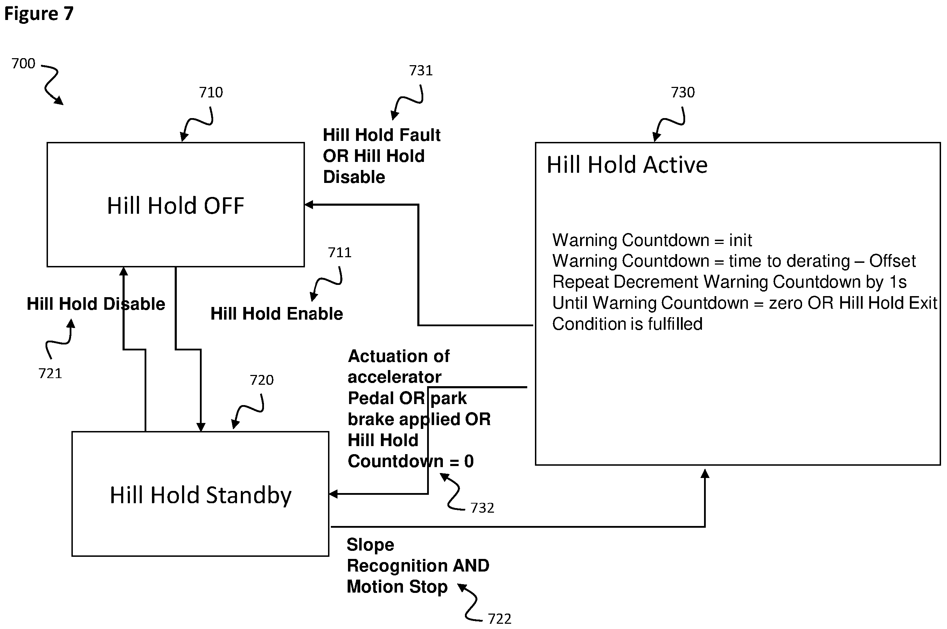

The vehicle control unit 110 may be configured to output an indication to a user that the hill hold feature is deactivated when the time indicator is smaller or equal than zero, e.g., as described also below with respect to Figure 7.

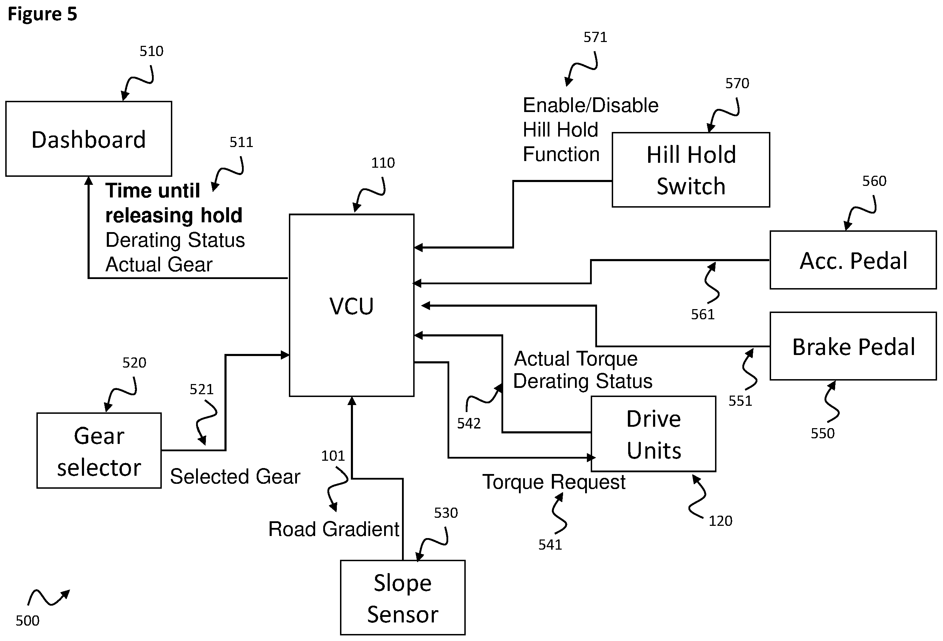

The vehicle control unit 110 may be configured to output an indication to a user that the hill hold feature is deactivated if information indicating an actuation of an acceleration pedal or information about an activation of a park brake is received, e.g., as shown and described below with respect to Figure 5 or Figure 7.

The information about the cooling 131 may comprise at least one of the following: a flow rate of a coolant of a vehicle cooling system 130, an amount of the coolant filled in the vehicle cooling system 130, a viscosity of the coolant, a type of the coolant, a temperature of the coolant.

The cooling system may be air-cooled or liquid-cooled, for example fan or radiator, etc. Any type of cooling can be used for cooling the electric drive 120.

The vehicle 100 may also be controlled by a vehicle control system. Such a vehicle control system can be used for indicating a remaining time for which the hill hold feature of the electric vehicle 100 can be provided. As described above, the hill hold feature enables keeping a position of the vehicle 100 at standstill on a slope 101 with the aid of the electric drive 120 of the vehicle 100.

Such a vehicle control system comprises: a vehicle control unit 110 as described above; and a sensor for providing sensor data comprising information for determining a road gradient 101 of the vehicle 100. The vehicle control unit 110 may be configured to determine the hold torque based on the sensor data.

As described above, the sensor can be a slope sensor or an acceleration sensor or any other kind of sensor that is able providing sensor data comprising information for determining the road gradient. The VCU can determine the road gradient directly from the sensor data of the slope sensor or indirectly from the sensor data of the acceleration or other sensor.

The solution described in this invention is based on the idea of coupling the electrical, mechanical and thermal properties of the vehicle 100 during hill hold situation. By calculating the required hold torque 121, estimating the equivalent power loss to achieve the hold torque 121, the generated heat and the temperature rise of the electric drive unit 120, and with prior knowledge of the temperature, from which a derating behavior of the drive unit 120 starts (thermal derating is reflected by the reduction of maximum output torque of the drive unit 120), the temperature at which the current hold torque 121 cannot be provided anymore can be determined.

Considering the longitudinal vehicle model (no steering dynamics included), the vehicle 100 is subject to:

1) gravity force $Mgsin(\theta)$
2) rolling resistance force $\mu Mgcos(\theta)$
3) air drag force $C_d\rho Av^2$,

where $\rho$ represents air density; A represents vehicle frontal area; v represents vehicle velocity; and $\theta$ represents slope angle.

The required force to hold the car on hill is:

$$R = Mgsin(\theta) + \mu Mgcos(\theta)$$

The air drag force can be omitted because hold is usually done at relatively low speed.

Table 1 below depicts the various parameters used in the vehicle model.

Table 1: Parameters used in the vehicle model

| Symbol | |
|---|---|
| $M$ | vehicle mass |
| $\theta$ | road slope |
| $R$ | total resistance |
| $r_d$ | wheel radius |
| $v$ | vehicle speed |
| $T$ | motor torque |
| $C_d$ | drag coefficient |
| $\rho$ | air density |
| $A$ | frontal area |

The determination of the required hold torque is usually the result of estimation algorithms based on sensor data. The estimation includes mass, slope angle, rolling resistance. Alternatively, the hold torque can be determined through a control loop over the wheel speed if the target wheel speed is set to zero. The hold torque should be equal to the total resistance of the car at zero speed ($T_{hold} = R * r_d \rightarrow$ Torque = Force x Radius).

Depending on the powertrain architecture, the powertrain control unit may feature a torque distribution logic that splits the torque demand to the different drive units. Examples of different powertrain architectures can be:

(i) rear wheel drive (one drive unit for 2 wheels OR two drive units, each per wheel);
(ii) front wheel drive (one drive unit for 2 wheels OR two drive units, each per wheel);
(iii) all-wheel drive (two drive units: one in front, one in rear OR three drive units: two in rear, one in front OR four drive units: a drive unit for each wheel).

Once the vehicle 100 is held at zero speed on slope 101, the heat generated (Power loss) from the drive units 120 can be quantified. The calculation can be done through mathematical models based on:

- rotor angular position $\varphi$
- hold torque $T_{hold}$

An estimation of the temperature rising profile of the drive units $\dot{\Theta}_{drive,units}$ 120 can be obtained by considering the cooling parameters 131 of the thermal system (or cooling system 130, respectively).

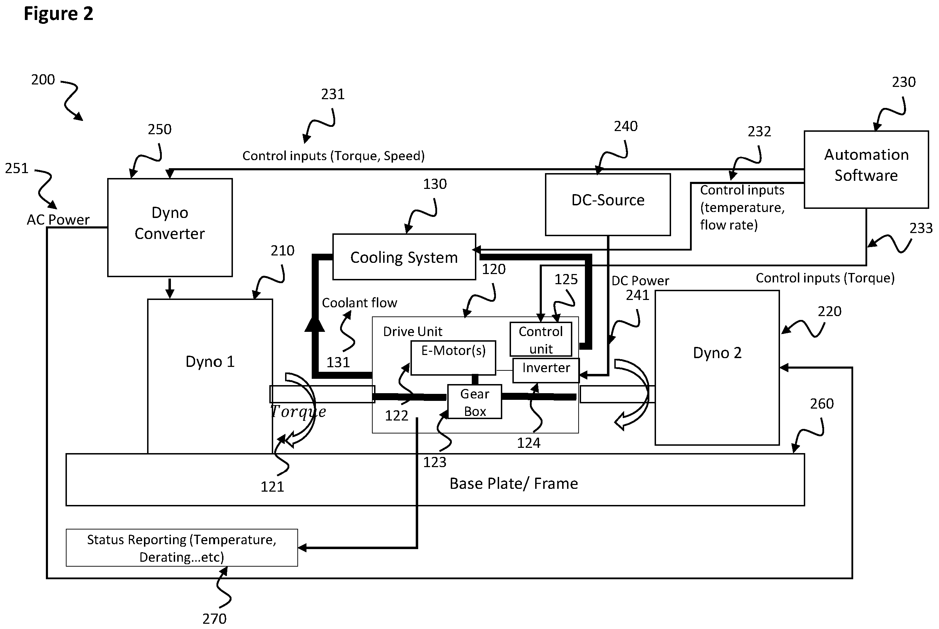

In this context, the drive units 120 refer to the power electronics, as shown in Figure 2, i.e., the inverter 124: converting Battery DC current 241 to AC current for the electric machines 122, the gearbox 123 which reduces the speed to an output shaft, and the electric machines 122 which provide mechanical power (torque 121 and speed) from the AC power fed to them by the inverter 124.

The temperature rising profile of the drive units 120 can be estimated as:

$$\dot{\Theta}_{drive,units} = f(\ P_{cool}, \varphi, T_{hold}, \omega = 0)$$

where $P_{cool}$ refers to the resulting cooling power transferred to the drive unit 120.

Figure 2 shows a block diagram illustrating an experimental setup 200 for determining the heat losses and temperature rise in the drive unit of an electrical vehicle.

In the empirical setup 200, a vehicle 100 as shown in Figure 1 is mounted on a base plate or frame 260 and the vehicle is running on this base plate 260. The vehicle comprises a drive unit 120 with one or more electrical motors 122, control unit 125, inverter 124 and gear box 123. A DC source 240 provides DC power 241 to the inverter 124. The drive unit 120 is cooled by a cooling system 130 which provides a coolant flow 131 cooling the drive unit 120. Automation software 230 controls the dynos 210, 220 via dyno converter 250, the cooling system 130 and the drive unit 120. Status reporting 270 provides results of temperature, derating, etc.

The empirical approach is an alternative for determining the heat losses and temperature rise in the drive unit 120. The system can be placed in an experimental setup 200 reflecting the real driving situation.

The drive units 120 are connected to:

- Dynos 210, 220 which provide load set points for the drive unit 120 under test;
- Dyno Converters 250 which include frequency converters providing dyno with required AC power to reach the set operating point;
- Automation system 230 which provides load set points, drive unit torque command, cooling system operating mode; and
- Cooling system 130 which provides cooling to the drive unit 120 and can vary the cooling parameters 131, e.g., temperature, flowrate, etc.

By varying the hold torque set points, cooling parameters and the rotor angular position, the temperature rise and the time until reaching the derating can be measured. Possible outcomes may be:

- No derating: cooling power is high enough to overcome the heat generation during holding. The time until derating is in this case infinity;
- Derating happens after $\Delta t_{derating}$: The cooling power slows down the heat generated but cannot overcome. The temperature continues rising and the derating happens after $\Delta t$.

The derating results under different operating conditions can be stored in a lookup table, e.g., as shown in Table 2, or transformed into data-driven model as shown in Figure 3.

Table 2: Lookup table for derating results under different operating conditions

| Hold Torque | Rotor Angular Position | Cooling parameters | Derating (yes/no) | Time until derating |
|---|---|---|---|---|
| Value Torque_1 | Value Angle_1 | Value Cooling_1 | No | ∞ |
| Value Torque_2 | Value Angle_2 | Value Cooling_2 | Yes | $\Delta t_{derating}\ (T_{hold,1}, \varphi_{,1}, P_{cool,1})$ |
| ⋮ | ⋮ | ⋮ | ⋮ | ⋮ |
| Value Torque_N | Value Angle_N | Value Cooling_N | Yes | $\Delta t_{derating}\ (T_{hold,N}, \varphi_{,N}, P_{cool,N})$ |

Figure 3 shows a schematic diagram illustrating an exemplary derating model 300 according to the invention.

The derating model 300 determines a time until derating 303 based on certain input parameters, such as the hold torque 121, one or more cooling parameters 131, a rotor position 301 and/or an initial temperature 302.

The derating model 300 describes a heat dissipation in the electric drive 120 and an associated derating of the electric drive 120 when the hold torque is provided by the electric drive 120 at standstill. The heat dissipation depends on the hold torque 121, the cooling 131 and the initial temperature of the electric drive 120.

The derating model 300 may comprise a memory storing a set of predefined hold torque values, a set of predefined cooling parameter values, a set of predefined initial temperatures and/or a set of rotor angular positions of the electric drive 120, e.g., as shown in Table 2 above. The memory may further comprise a time until the derating of the electric drive begins for combinations of the hold torque values, the cooling parameter values, the initial temperatures and/or the rotor angular positions of the electric drive.

The derating model 300 may comprise a lookup table, e.g., as shown in Table 2 above, a neural network, or a function fit based on polynomial functions.

The overall procedure can be visualized in the flowchart 500 shown in Figure 5. The goal of the disclosed hill hold feature is to warn the driver about the amount of time until start of derating and decrease of the torque required to hold the car on hill.

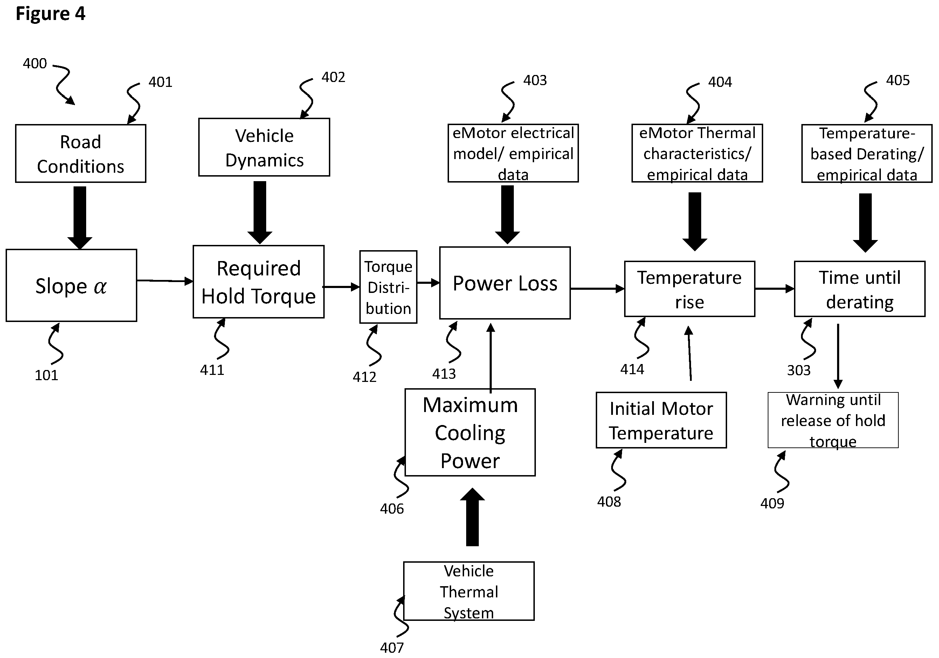

Figure 4 shows a schematic diagram illustrating an exemplary flowchart 400 for implementing a hill hold feature in an electric vehicle according to the invention.

In this flowchart 400 road conditions 401 are considered to determine the slope 101. Vehicle dynamics 402 and the slope 101 determine the required hold torque 411 which can be used to determine a torque distribution 412. A power loss 413 can be determined by considering electrical motor and/or empirical data thereof 403, a maximum cooling power 406 which depends on vehicle thermal system 407, and the torque distribution 412.

Temperature rising 414 can be determined by considering initial motor temperature 408, electrical motor thermal characteristics and/or empirical data thereof 404 and the power loss 413. The time until derating 303 can be determined by considering a temperature-based derating and/or empirical data thereof 405 and temperature rise 414. Based on this time until derating 303, a warning until release of hold torque 409 can be provided, e.g., by means of a countdown.

The warning countdown until release of hold torque 409 can be offset by a safety factor to account for user reaction delay. The offset can be calibrated according to the use case.

$$\Delta t_{warning} = \Delta t_{derating} - \Delta t_{offset}$$

When driving on a hill and when the computed $\Delta t_{warning} \leq 0$, an indication can be given to the user that the hill hold feature with the electric drive is deactivated. This can be due to too high slope, high drive unit temperature, etc.

Figure 5 shows a schematic diagram illustrating an exemplary vehicle control system 500 for implementing the hill hold feature according to the invention.

The solution described in this invention can be implemented in a vehicle control unit (VCU) 110 as shown in Figure 5 that coordinates the powertrain features as upper domain controller. The concept is to implement the derating model, e.g., the derating model 300 shown in Figure 3, with different input parameters in the VCU 110.

The VCU 110 manages the torque 121 of the electric drive 120 during the hill hold situation and receives information from the other controllers as shown in Figure 5.

The system architecture shown in Figure 5 may comprise:

- a hill hold switch 570 which may be used to enable and disable 571 the hill hold feature;
- a Gear selector 520 to choose between Park, Drive, Reverse or Neutral as the selected gear 521;
- a Slope Sensor 530 or other estimator to estimate the road gradient 101;
- Acceleration Pedal 560 and Brake Pedal 550 which are actuated by the driver to obtain information 561, 551 about these pedals;
- a Dashboard 510 that receives information 511 about different component and feature status;
- VCU 110 as coordinator of the hill hold feature and embedded warning concept for the derating case;
- the one or more drive units 120 that provide information about the actual torque derating status 542 to the VCU and receive information about a torque request 541 from the VCU 110.

The vehicle control system 500 shown in Figure 5 can be used for indicating a remaining time for which a hill hold feature of an electric vehicle can be provided. The hill hold feature enables keeping a position of the vehicle 100 at standstill on a slope with the aid of the electric drive 120 of the vehicle 100 as described above with respect to Figure 1. The vehicle control system 500 comprises a vehicle control unit 110 as described above with respect to Figure 1 and 2. The vehicle control system 500 may further comprise a sensor for providing sensor data comprising information for determining a road gradient 101 of the vehicle 100. The sensor may be a slope sensor 530 as shown in Figure 5 or any other sensor that is capable of providing information for determining the road gradient 101 of the vehicle 100, e.g., an acceleration sensor, a gyro-sensor, etc.

The vehicle control unit 110 is configured to determine the hold torque based on the sensor data.

Figure 6 shows a schematic diagram 600 illustrating an exemplary implementation of a hill hold warning function 620 according to the invention.

The hill hold warning function 620 provides a countdown 623 for hill hold that is shown to the user.

The hill hold warning function 620 can have the following inputs:

- Hill/Hold Entry and Exit Conditions 622 which can be defined on vehicle level;
- The hill hold model 610, e.g., empirical OR mathematical OR data-driven model of the time until derating, e.g. as described above with respect to Figure 3 or shown in Table 2 above.

The output is the countdown 623 for Hill Hold, indicated to the user.

Figure 7 shows a state diagram 700 representing an exemplary implementation of the hill hold feature according to the invention.

The hill hold feature can be represented as a state diagram 700 as shown in Figure 7. However, the hill hold feature can also be represented as a table, e.g., lookup table, or as some conditional request or by other means.

In the exemplary representation as a state diagram or state machine 700, the state machine 700 may include an exemplary number of three states: first state 710 which corresponds to hill hold off; second state 720 which corresponds to hill hold standby; and third state 730 which corresponds to hill hold active. More states can be implemented as well.

The three states of the state machine 700 of the hill hold function can be exemplarily described as follows:

- Hill Hold OFF, 710: Hill Hold feature is deactivated
- Hill Hold Standby, 720: Hill Hold feature is enabled
- Hill Hold Active, 730: Hill Hold is applied, i.e., torque output of the motor to keep zero speed on hill.

The following exemplary transitions can be used to describe the state machine 700:

- A transition from OFF state 710 to Standby state 720 can be performed if Hill hold feature is enabled 711.
- A transition from Standby state 720 to Active state 730 can be performed if Slope can be estimated and vehicle speed is around zero, i.e., motion stop 722.
- A transition from Active state 730 to Standby state 720 can be performed if the user actuates the accelerator pedal to request a torque bigger than the hold torque OR the park brake is applied OR Hill Hold countdown reaches zero 732.
- A transition from Active state 730 to OFF state 710 can be performed if Hill Hold Fault occurs OR Hill Hold feature is disabled by user 731.
- A transition from Standby state 720 to OFF state 710 can be performed if Hill Hold is disabled 721 by user.

During the Hill Hold Active State 730, the countdown can start from the calculated warning time for the current slope and can start decrementing until reaching zero.

Figure 8 shows a schematic diagram illustrating a hill hold countdown 800 according to the invention.

A visualization of the countdown 800 is displayed to the user. Here, an example is shown where the initial warning countdown is 60s. When the countdown reaches 5 seconds, the feature indicates the driver to prepare for hill start. When the countdown reaches 0s, hill hold is released and the driver is informed accordingly.

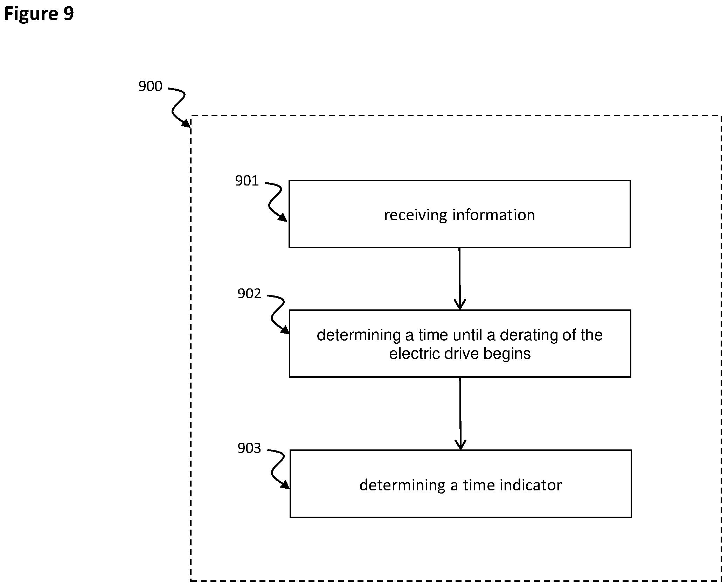

Figure 9 shows a schematic diagram illustrating a method 900 for implementing the hill hold feature according to the invention.

Such a method 900 can be used for indicating a remaining time for which a hill hold feature of an electric vehicle 100 can be provided, e.g., as shown in Figure 1. As described above, the hill hold feature enables keeping a position of the vehicle 100 at standstill on a slope with the aid of an electric drive 120 of the vehicle 100.

The method 900 comprises: receiving 901 information for determining a hold torque of the electric drive 120 for holding the vehicle 100 at standstill on the slope 101, information about a cooling of the electric drive 120 and information about an initial temperature of the electric drive when the hill hold feature is enabled.

The method 900 comprises: determining 902 a time until a derating of the electric drive 120 begins based on a predefined derating model of the electric drive and the information about the hold torque, the information about the cooling and the information about the initial temperature, wherein the derating model describes a heat dissipation in the electric drive and an associated derating of the electric drive when the hold torque is provided by the electric drive at standstill, the heat dissipation depending on the hold torque, the cooling and the initial temperature of the electric drive, e.g., as described above with respect to Figures 1 to 8.

The method 900 comprises: determining 903 a time indicator, the time indicator indicating the remaining time for which the hill hold feature can be provided based on the time until the derating of the electric drive begins, e.g., as described above with respect to Figures 1 to 8.

**Claims**

1. A vehicle control unit (110) for indicating a remaining time for which a hill hold feature of an electric vehicle (100) can be provided, wherein the hill hold feature enables keeping a position of the vehicle (100) at standstill on a slope (101) with the aid of an electric drive (120) of the vehicle (100), wherein the vehicle control unit (110) is configured to:

    receive information for determining a hold torque (121) of the electric drive (120) for holding the vehicle (100) at standstill on the slope (101), information about a cooling (131) of the electric drive (120) and information about an initial temperature of the electric drive (120) when the hill hold feature is enabled;
    determine a time until a derating of the electric drive (120) begins based on a predefined derating model of the electric drive (120) and the information for determining the hold torque (121), the information about the cooling (131) and the information about the initial temperature,
    wherein the derating model describes a heat dissipation in the electric drive (120) and an associated derating of the electric drive (120) when the hold torque is provided by the electric drive (120) at standstill, the heat dissipation depending on the hold torque (121), the cooling (131) and the initial temperature of the electric drive (120); and
    determine a time indicator, the time indicator indicating the remaining time for which the hill hold feature can be provided based on the time until the derating of the electric drive (120) begins.

2. The vehicle control unit (110) of claim 1, configured to:

    receive information about a rotor angular position of the electric drive; and
    determine the time until the derating of the electric drive begins further based on the angular position of the electric drive.

3. The vehicle control unit (110) of any of the preceding claims,

    wherein the derating model comprises a memory storing a set of predefined hold torque values, a set of predefined cooling parameter values, a set of predefined initial temperatures and/or a set of rotor angular positions of the electric drive,
    wherein the memory further comprises a time until the derating of the electric drive begins for combinations of the hold torque values, the cooling parameter values, the initial temperatures and/or the rotor angular positions of the electric drive.

4. The vehicle control unit (110) of any of the preceding claims,
    wherein the derating model comprises one or more of a lookup table, a neural network, or a function fit based on polynomial functions.

5. The vehicle control unit (110) of any of the preceding claims, configured to:

    receive sensor data comprising information for determining a road gradient; and
    determine the hold torque based on the sensor data.

6. The vehicle control unit (110) of claim 5, configured to:

    determine the hold torque based on a mass of the vehicle, a rolling resistance of the vehicle and the road gradient; or
    determine the hold torque based on a total resistance of the vehicle and a wheel radius of the vehicle.

7. The vehicle control unit (110) of any of the preceding claims, configured to:

    output the time indicator as a visual signal to a display or a dashboard of the vehicle or as an acoustic signal or as a haptic signal.

8. The vehicle control unit (110) of any of the preceding claims, configured to:

    initialize a warning countdown based on the time indicator.

9. The vehicle control unit (110) of claim 8,

**EP 4 452 716 B1**

wherein the time indicator is offset by a safety factor accounting for a user reaction delay.

10. The vehicle control unit (110) of claim 8 or 9, configured to:
    disable the hill hold feature when the warning countdown has ended.

11. The vehicle control unit (110) of any of the preceding claims, configured to:
    output an indication to a user that the hill hold feature is deactivated when the time indicator is smaller or equal than zero.

12. The vehicle control unit (110) of any of the preceding claims, configured to:
    output an indication to a user that the hill hold feature is deactivated if information indicating an actuation of an acceleration pedal or information about an activation of a park brake is received.

13. The vehicle control unit (110) of any of the preceding claims, wherein the information about the cooling (131) comprises at least one of the following:

    a flow rate of a coolant of a vehicle cooling system (130),
    an amount of the coolant filled in the vehicle cooling system (130),
    a viscosity of the coolant,
    a type of the coolant,
    a temperature of the coolant.

14. A vehicle control system (500) for indicating a remaining time for which a hill hold feature of an electric vehicle (100) can be provided, wherein the hill hold feature enables keeping a position of the vehicle at standstill on a slope with the aid of an electric drive of the vehicle, wherein the vehicle control system comprises:

    a vehicle control unit (110) according to any of the preceding claims; and
    a sensor for providing sensor data comprising information for determining a road gradient (101) of the vehicle, wherein the vehicle control unit (110) is configured to determine the hold torque based on the sensor data.

15. A method (900) for indicating a remaining time for which a hill hold feature of an electric vehicle can be provided, wherein the hill hold feature enables keeping a position of the vehicle at standstill on a slope with the aid of an electric drive of the vehicle, wherein the method comprises:

    receiving (901) information for determining a hold torque of the electric drive for holding the vehicle at standstill on the slope, information about a cooling of the electric drive and information about an initial temperature of the electric drive when the hill hold feature is enabled;
    determining (902) a time until a derating of the electric drive begins based on a predefined derating model of the electric drive and the information about the hold torque, the information about the cooling and the information about the initial temperature,
    wherein the derating model describes a heat dissipation in the electric drive and an associated derating of the electric drive when the hold torque is provided by the electric drive at standstill, the heat dissipation depending on the hold torque, the cooling and the initial temperature of the electric drive; and
    determining (903) a time indicator, the time indicator indicating the remaining time for which the hill hold feature can be provided based on the time until the derating of the electric drive begins.

**Patentansprüche**

1. Fahrzeugsteuereinheit (110) zum Angeben einer verbleibenden Zeit, für die eine Berganfahrhilfe eines Elektrofahrzeugs (100) bereitgestellt werden kann, wobei die Berganfahrhilfe ein Halten einer Position des Fahrzeugs (100) im Stillstand auf einer Steigung (101) mithilfe eines Elektroantriebs (120) des Fahrzeugs (100) ermöglicht, wobei die Fahrzeugsteuereinheit (110) konfiguriert ist zum:

    Empfangen von Informationen zum Bestimmen eines Haltemoments (121) des Elektroantriebs (120) zum Halten des Fahrzeugs (100) im Stillstand auf der Steigung (101), Informationen über eine Kühlung (131) des Elektroantriebs (120) und Informationen über eine Anfangstemperatur des Elektroantriebs (120) bei aktivierter Berganfahrhilfe;

Bestimmen einer Zeit bis zu einem Beginn einer Leistungsherabsetzung des Elektroantriebs (120) basierend auf einem vordefinierten Leistungsherabsetzungsmodell des Elektroantriebs (120) und den Informationen zum Bestimmen des Haltemoments (121), den Informationen über die Kühlung (131) und den Informationen über die Anfangstemperatur,

wobei das Leistungsherabsetzungsmodell eine Wärmeableitung in dem Elektroantrieb (120) und eine damit verbundene Leistungsherabsetzung des Elektroantriebs (120), wenn das Haltemoment durch den Elektroantrieb (120) im Stillstand bereitgestellt wird, beschreibt, wobei die Wärmeableitung von dem Haltemoment (121), der Kühlung (131) und der Anfangstemperatur des Elektroantriebs (120) abhängt; und

Bestimmen einer Zeitangabe, wobei die Zeitangabe die verbleibende Zeit angibt, für die die Berganfahrhilfe bereitgestellt werden kann, basierend auf der Zeit bis zum Beginn der Leistungsherabsetzung des Elektroantriebs (120).

2. Fahrzeugsteuereinheit (110) nach Anspruch 1, die konfiguriert ist zum:
Empfangen von Informationen über eine Rotorwinkelposition des Elektroantriebs; und Bestimmen der Zeit bis zum Beginn der Leistungsherabsetzung des Elektroantriebs ferner basierend auf der Winkelposition des Elektroantriebs.

3. Fahrzeugsteuereinheit (110) nach einem der vorstehenden Ansprüche,

wobei das Leistungsherabsetzungsmodell einen Speicher umfasst, der einen Satz vordefinierter Haltemomentwerte, einen Satz vordefinierter Kühlparameterwerte, einen Satz vordefinierter Anfangstemperaturen und/oder einen Satz Rotorwinkelpositionen des Elektroantriebs speichert,
wobei der Speicher ferner eine Zeit bis zum Beginn der Leistungsherabsetzung des Elektroantriebs für Kombinationen aus den Haltemomentwerten, den Kühlparameterwerten, den Anfangstemperaturen und/oder den Rotorwinkelpositionen des Elektroantriebs umfasst.

4. Fahrzeugsteuereinheit (110) nach einem der vorstehenden Ansprüche,
wobei das Leistungsherabsetzungsmodell eines oder mehrere von einer Nachschlagetabelle, einem neuronalen Netzwerk oder einer Funktionsanpassung basierend auf Polynomfunktionen umfasst.

5. Fahrzeugsteuereinheit (110) nach einem der vorstehenden Ansprüche, die konfiguriert ist zum:

Empfangen von Sensordaten, die Informationen zum Bestimmen einer Straßenneigung umfassen; und Bestimmen des Haltemoments basierend auf den Sensordaten.

6. Fahrzeugsteuereinheit (110) nach Anspruch 5, die konfiguriert ist zum:

Bestimmen des Haltemoments basierend auf einer Masse des Fahrzeugs, einem Rollwiderstand des Fahrzeugs und der Straßenneigung; oder
Bestimmen des Haltemoments basierend auf einem Gesamtwiderstand des Fahrzeugs und einem Radradius des Fahrzeugs.

7. Fahrzeugsteuereinheit (110) nach einem der vorstehenden Ansprüche, die konfiguriert ist zum:
Ausgeben der Zeitangabe als visuelles Signal an ein Display oder ein Armaturenbrett des Fahrzeugs oder als akustisches Signal oder als haptisches Signal.

8. Fahrzeugsteuereinheit (110) nach einem der vorstehenden Ansprüche, die konfiguriert ist zum:
Initialisieren eines Warn-Countdowns basierend auf der Zeitangabe.

9. Fahrzeugsteuereinheit (110) nach Anspruch 8,
wobei die Zeitangabe um einen Sicherheitsfaktor versetzt ist, der eine Verzögerung einer Reaktion eines Benutzers berücksichtigt.

10. Fahrzeugsteuereinheit (110) nach Anspruch 8 oder 9, die konfiguriert ist zum: Deaktivieren der Berganfahrhilfe, wenn der Warn-Countdown abgelaufen ist.

11. Fahrzeugsteuereinheit (110) nach einem der vorstehenden Ansprüche, die konfiguriert ist zum:
Ausgeben eines Hinweises an einen Benutzer, dass die Berganfahrhilfe deaktiviert ist, wenn die Zeitangabe kleiner oder gleich null ist.

12. Fahrzeugsteuereinheit (110) nach einem der vorstehenden Ansprüche, die konfiguriert ist zum:
Ausgeben eines Hinweises an einen Benutzer, dass die Berganfahrhilfe deaktiviert ist, wenn Informationen, die auf eine Betätigung eines Gaspedals hinweisen, oder Informationen über eine Aktivierung einer Feststellbremse empfangen werden.

13. Fahrzeugsteuereinheit (110) nach einem der vorstehenden Ansprüche, wobei die Informationen über die Kühlung (131) mindestens eines der Folgenden umfassen:

eine Strömungsrate eines Kühlmittels eines Fahrzeugkühlsystems (130),
eine Menge des in das Fahrzeugkühlsystem (130) eingefüllten Kühlmittels,
eine Viskosität des Kühlmittels,
eine Art des Kühlmittels,
eine Temperatur des Kühlmittels.

14. Fahrzeugsteuersystem (500) zum Angeben einer verbleibenden Zeit, für die eine Berganfahrhilfe eines Elektrofahrzeugs (100) bereitgestellt werden kann, wobei die Berganfahrhilfe ein Halten einer Position des Fahrzeugs im Stillstand auf einer Steigung mithilfe eines Elektroantriebs des Fahrzeugs ermöglicht, wobei das Fahrzeugsteuersystem umfasst:

eine Fahrzeugsteuereinheit (110) nach einem der vorstehenden Ansprüche; und
einen Sensor zum Bereitstellen von Sensordaten, die Informationen zum Bestimmen einer Straßenneigung (101) des Fahrzeugs umfassen,
wobei die Fahrzeugsteuereinheit (110) konfiguriert ist, um das Haltemoment basierend auf den Sensordaten zu bestimmen.

15. Verfahren (900) zum Angeben einer verbleibenden Zeit, für die eine Berganfahrhilfe eines Elektrofahrzeugs bereitgestellt werden kann, wobei die Berganfahrhilfe ein Halten einer Position des Fahrzeugs im Stillstand auf einer Steigung mithilfe eines Elektroantriebs des Fahrzeugs ermöglicht, wobei das Verfahren umfasst:

Empfangen (901) von Informationen zum Bestimmen eines Haltemoments des Elektroantriebs zum Halten des Fahrzeugs im Stillstand auf der Steigung, Informationen über eine Kühlung des Elektroantriebs und Informationen über eine Anfangstemperatur des Elektroantriebs bei aktivierter Berganfahrhilfe;
Bestimmen (902) einer Zeit bis zum Beginn einer Leistungsherabsetzung des Elektroantriebs basierend auf einem vordefinierten Leistungsherabsetzungsmodell des Elektroantriebs und den Informationen über das Haltemoment, den Informationen über die Kühlung und den Informationen über die Anfangstemperatur,
wobei das Leistungsherabsetzungsmodell eine Wärmeableitung in dem Elektroantrieb und eine damit verbundene Leistungsherabsetzung des Elektroantriebs, wenn das Haltemoment durch den Elektroantrieb im Stillstand bereitgestellt wird, beschreibt,
wobei die Wärmeableitung von dem Haltemoment, der Kühlung und der Anfangstemperatur des Elektroantriebs abhängt; und
Bestimmen (903) einer Zeitangabe, wobei die Zeitangabe die verbleibende Zeit angibt, für die die Berganfahrhilfe bereitgestellt werden kann, basierend auf der Zeit bis zum Beginn der Leistungsherabsetzung des Elektroantriebs.

**Revendications**

1. Unité de commande de véhicule (110) permettant d'indiquer un temps restant pendant lequel une caractéristique de stabilité en côte d'un véhicule électrique (100) peut être assurée, dans laquelle la caractéristique de stabilité en côte permet de maintenir une position du véhicule (100) à l'arrêt sur une pente (101) à l'aide d'une propulsion électrique (120) du véhicule (100), dans laquelle l'unité de commande de véhicule (110) est configurée pour :

recevoir des informations permettant de déterminer un couple de stabilité (121) de la propulsion électrique (120) pour maintenir le véhicule (100) à l'arrêt sur la pente (101), des informations concernant un refroidissement (131) de la propulsion électrique (120) et des informations concernant une température initiale de la propulsion électrique (120) lorsque la caractéristique de stabilité en côte est activée ;
déterminer un temps écoulé avant le début d'un déclassement de la propulsion électrique (120) sur la base d'un modèle de déclassement prédéfini de la propulsion électrique (120) et des informations permettant de déterminer le couple de stabilité (121), des informations concernant le refroidissement (131) et des informations concernant la température initiale,

dans laquelle le modèle de déclassement décrit une dissipation de chaleur dans la propulsion électrique (120) et un déclassement associé de la propulsion électrique (120) lorsque le couple de stabilité est assuré par la propulsion électrique (120) à l'arrêt, la dissipation de chaleur dépendant du couple de stabilité (121), du refroidissement (131) et de la température initiale de la propulsion électrique (120) ; et

déterminer un indicateur de temps, l'indicateur de temps indiquant le temps restant pendant lequel la caractéristique de stabilité en côte peut être assurée sur la base du temps écoulé avant le début du déclassement de la propulsion électrique (120).

2. Unité de commande de véhicule (110) selon la revendication 1, configurée pour :

recevoir des informations concernant une position angulaire de rotor de la propulsion électrique ; et
déterminer le temps écoulé avant le début du déclassement de la propulsion électrique sur la base de la position angulaire de la propulsion électrique.

3. Unité de commande de véhicule (110) selon l'une quelconque des revendications précédentes,

dans laquelle le modèle de déclassement comprend une mémoire qui stocke un ensemble de valeurs prédéfinies de couple de stabilité, un ensemble de valeurs prédéfinies de paramètres de refroidissement, un ensemble de températures initiales prédéfinies et/ou un ensemble de positions angulaires de rotor de la propulsion électrique, dans laquelle la mémoire comprend en outre un temps écoulé avant le début du déclassement de la propulsion électrique pour des combinaisons de valeurs de couple de stabilité, de valeurs de paramètres de refroidissement, de températures initiales et/ou de positions angulaires de rotor de la propulsion électrique.

4. Unité de commande de véhicule (110) selon l'une quelconque des revendications précédentes,
dans laquelle le modèle de déclassement comprend un ou plusieurs parmi une table de recherche, un réseau neuronal ou un ajustement de fonction sur la base de fonctions polynomiales.

5. Unité de commande de véhicule (110) selon l'une quelconque des revendications précédentes, configurée pour :

recevoir des données de capteur comprenant des informations permettant de déterminer un gradient de route ; et
déterminer le couple de stabilité sur la base des données de capteur.

6. Unité de commande de véhicule (110) selon la revendication 5, configurée pour :

déterminer le couple de stabilité sur la base de la masse du véhicule, d'une résistance au roulement du véhicule et du gradient de route ; ou
déterminer le couple de stabilité sur la base d'une résistance totale du véhicule et d'un rayon de roue du véhicule.

7. Unité de commande de véhicule (110) selon l'une quelconque des revendications précédentes, configurée pour :
émettre l'indicateur de temps comme signal visuel sur un écran ou un tableau de bord du véhicule, ou comme signal acoustique ou comme signal haptique.

8. Unité de commande de véhicule (110) selon l'une quelconque des revendications précédentes, configurée pour :
initialiser un compte à rebours d'avertissement sur la base de l'indicateur de temps.

9. Unité de commande de véhicule (110) selon la revendication 8,
dans laquelle l'indicateur de temps est décalé par un facteur de sécurité tenant compte d'un délai de réaction de l'utilisateur.

10. Unité de commande de véhicule (110) selon la revendication 8 ou 9, configuré pour : désactiver la caractéristique de stabilité en côte lorsque le compte à rebours d'avertissement est terminé.

11. Unité de commande de véhicule (110) selon l'une quelconque des revendications précédentes, configurée pour :
fournir une indication à un utilisateur selon laquelle la caractéristique de stabilité en côte est désactivée lorsque l'indicateur de temps est inférieur ou égal à zéro.

12. Unité de commande de véhicule (110) selon l'une quelconque des revendications précédentes, configurée pour : fournir à l'utilisateur une indication selon laquelle la caractéristique de stabilité en côte est désactivée si des informations indiquant un actionnement d'une pédale d'accélération ou des informations concernant une activation d'un frein de stationnement sont reçues.

13. Unité de commande de véhicule (110) selon l'une quelconque des revendications précédentes, dans laquelle les informations concernant le refroidissement (131) comprennent au moins l'un parmi ce qui suit :

> un débit d'un liquide de refroidissement d'un système de refroidissement de véhicule (130),
> une quantité du liquide de refroidissement remplie dans le système de refroidissement de véhicule (130),
> une viscosité du liquide de refroidissement,
> un type du liquide de refroidissement,
> une température du liquide de refroidissement.

14. Système de commande de véhicule (500) permettant d'indiquer le temps restant pendant lequel une caractéristique de stabilité en côte d'un véhicule électrique (100) peut être assurée, dans lequel la caractéristique de stabilité en côte permet de maintenir une position du véhicule à l'arrêt sur une pente à l'aide d'une propulsion électrique du véhicule, dans lequel le système de commande de véhicule comprend :

> une unité de commande de véhicule (110) selon l'une quelconque des revendications précédentes ; et
> un capteur destiné à produire des données de capteur comprenant des informations permettant de déterminer le gradient de route (101) du véhicule,
> dans lequel l'unité de commande de véhicule (110) est configurée pour déterminer le couple de stabilité sur la base des données de capteur.

15. Procédé (900) permettant d'indiquer le temps restant pendant lequel une caractéristique de stabilité en côte d'un véhicule électrique peut être fournie, dans lequel la caractéristique de stabilité en côte permet de maintenir une position du véhicule à l'arrêt sur une pente à l'aide d'une propulsion électrique du véhicule, dans lequel le procédé comprend :

> la réception (901) d'informations permettant de déterminer un couple de stabilité de la propulsion électrique pour maintenir le véhicule à l'arrêt sur la pente, d'informations concernant le refroidissement de la propulsion électrique et d'informations concernant une température initiale de la propulsion électrique lorsque la caractéristique de stabilité en côte est activée ;
> la détermination (902) d'un temps avant le début d'un déclassement de la propulsion électrique sur la base d'un modèle de déclassement prédéfini de la propulsion électrique et des informations concernant le couple de stabilité, des informations concernant le refroidissement et des informations concernant la température initiale, dans lequel le modèle de déclassement décrit une dissipation de chaleur dans la propulsion électrique et un déclassement associé de la propulsion électrique lorsque le couple de stabilité est fourni par la propulsion électrique à l'arrêt, la dissipation de chaleur dépendant du couple de stabilité, du refroidissement et de la température initiale de la propulsion électrique ; et
> la détermination (903) d'un indicateur de temps, l'indicateur de temps indiquant le temps restant pendant lequel la caractéristique de stabilité en côte peut être assurée sur la base du temps écoulé avant le début du déclassement de la propulsion électrique.

**Figure 1**

EP 4 452 716 B1

**Figure 2**

200

231

250

Control inputs (Torque, Speed)

240

232

230

Automation Software

251

AC Power

Dyno Converter

130

DC-Source

Control inputs (temperature, flow rate)

233

210

Cooling System

120

125

DC Power

Control inputs (Torque)

Coolant flow

Dyno 1

131

Drive Unit

E-Motor(s)

Control unit

241

Dyno 2

220

Inverter

260

Torque

122

Gear Box

123

124

121

Base Plate/ Frame

Status Reporting (Temperature, Derating...etc)

270

EP 4 452 716 B1

**Figure 3**

**Figure 4**

**Figure 5**

EP 4 452 716 B1

**Figure 6**

600

610

| Hold Torque | Cooling parameters | Derating (yes/no) | Time until derating |
|---|---|---|---|
| Value_1 | ... | No | |
| Value_2 | ... | Yes | 30s |
| Value_3 | ... | Yes | 15s |
| Value_4 | ... | Yes | 3s |

621

Empirical Model for derating when using hold torque

620

Hill Hold Warning Function

623

Countdown for Hill Hold shown to User

622

Hill Hold Entry and Exit Conditions

EP 4 452 716 B1

**Figure 7**

700

710 **Hill Hold OFF**

711 **Hill Hold Enable**

731 **Hill Hold Fault OR Hill Hold Disable**

730 **Hill Hold Active**

Warning Countdown = init
Warning Countdown = time to derating – Offset
Repeat Decrement Warning Countdown by 1s
Until Warning Countdown = zero OR Hill Hold Exit
Condition is fulfilled

720 **Hill Hold Standby**

721 **Hill Hold Disable**

732 **Actuation of accelerator Pedal OR park brake applied OR Hill Hold Countdown = 0**

722 **Slope Recognition AND Motion Stop**

**Figure 8**

800

Hill Hold Countdown:

60s

Hill Hold Countdown:

5s

Please Prepare for
Hill Start

Hill Hold Countdown:

0s

Hill Hold Released

EP 4 452 716 B1

**Figure 9**

EP 4 452 716 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2018290655 A1